# DEMANDE DE BREVET EUROPEEN

(11) **EP 0 558 367 A1**
(43) Date de publication de la demande: **01.09.1993**
(21) Numéro de dépôt: 93400325.2
(22) Date de dépôt: 09.02.1993
(51) Int. Cl.: B65D 88/12, B60P 1/64

(54) **Structure pour permettre de charger ou décharger des conteneurs avec un dispositif de manutention à bras de levage hydraulique**

(30) Priorité: 24.02.1992 FR 9202090
(71) Demandeur: MARREL, F-42160 Andrézieux-Bouthéon (FR)
(72) Inventeur: Januel, Bernard, F-42100 Rochetaillee (FR); Robert, Michel, F-42390 Villars (FR)
(74) Mandataire: Rinuy, Santarelli

(57) **Abrégé**

La structure est essentiellement prévue pour des marchandises en forme de conteneur (1) muni de pièces de coin (2A-5B), pour l'accrochage duquel elle comporte : sur une portion verticale (7), deux dispositifs de verrouillage (10A, 10B) pour coopérer avec les pièces de coin supérieures avant (2A, 2B) ; et sur une portion horizontale (8) deux dispositifs de verrouillage (20A, 20B) pour coopérer avec les pièces de coin inférieures arrière (5A, 5B), grâce à quoi le conteneur (1 ) accroché à la structure (6') procure une rigidification entre les portions verticale (7) et horizontale (8).

## Description

L'invention a trait à une structure pour permettre de charger ou décharger des marchandises à transporter avec un dispositif de manutention à bras de levage hydraulique.

On connaît déjà de telles structures, appelées palettes, plates-formes ou flatrack, qui comportent une portion horizontale, prévue pour que les marchandises y soient posées et munie de moyens pour accrocher celles-ci, formés par des anneaux ou des taquets destinés à coopérer avec des liens d'amarrage de la marchandise, et par quatre verrous tournants (twist-lock) prévus pour le cas où la marchandise à transporter est un conteneur muni de pièces de coin (corner fitting), chaque verrou tournant étant adapté à coopérer avec une pièce de coin inférieure respective du conteneur, cette portion horizontale étant munie de rails longitudinaux adaptés à rouler sur les galets situés à l'arrière du dispositif de manutention, la structure comportant également une portion verticale en forme de A, munie à son sommet d'une anse de levage adaptée à coopérer avec le crochet du dispositif de manutention, ce crochet étant situé à l'extrémité libre du bras de levage, et plus précisément au sommet d'une potence, par exemple articulée sur un faux châssis lui-même articulé sur le châssis du véhicule où est monté le dispositif de manutention.

Pour charger la structure, on fait basculer le bras de levage vers l'arrière du véhicule, on engage le crochet situé à l'extrémité libre de la potence dans l'anse de levage, on fait basculer le bras vers l'avant, et au cours de cette manoeuvre la structure est soulevée à l'avant, tirée vers le véhicule en restant inclinée, puis ses deux rails inférieurs viennent en contact avec les galets montés à l'arrière du dispositif, les rails roulent ensuite sur les galets pendant que la structure continue à avancer en revenant à la position horizontale, et en fin de mouvement la structure repose sur les galets tandis qu'elle est supportée à l'avant par le crochet du bras (voir notamment les brevets français 2.109.109 et 2.185.520).

L'invention vise à améliorer ce genre de structures.

Elle propose à cet effet une structure pour permettre de charger ou décharger des marchandises à transporter avec un dispositif de manutention à bras de levage hydraulique, comportant : des moyens pour y accrocher les marchandises, une portion verticale munie d'une anse de levage adaptée à coopérer avec le crochet du dispositif de manutention, et une portion horizontale munie de rails longitudinaux adaptés à rouler sur les galets situés à l'arrière du dispositif de manutention ; caractérisée en ce que les moyens pour accrocher la marchandise à transporter comportent des moyens pour accrocher un conteneur muni de pièces de coin, comportant : sur ladite portion verticale, deux premiers dispositifs de verrouillage adaptés chacun à coopérer avec une pièce de coin supérieure avant respective d'un dit conteneur dont la face avant est disposée en regard de la portion verticale ; et sur ladite portion horizontale, deux deuxièmes dispositifs de verrouillage adaptés chacun à coopérer avec une pièce de coin inférieure arrière respective d'un dit conteneur dont la face inférieure est disposée en regard de la portion horizontale, grâce à quoi ledit conteneur accroché à la structure procure une rigidification entre lesdites portions verticale et horizontale.

En utilisant ainsi la rigidité du conteneur, l'inertie des profilés qui constituent les membrures de la structure selon l'invention, peut être considérablement réduite par rapport aux structures antérieures où le conteneur était accroché uniquement par ses pièces de coins inférieures grâce aux quatre verrous tournants situés sur la partie horizontale.

La structure selon l'invention peut donc avoir un poids beaucoup plus faible que celui des structures antérieures, malgré une portion verticale plus développée que dans les structures antérieures (elle va jusqu'aux pièces de coins supérieures de la face avant du conteneur au lieu de se limiter à une forme en A au sommet de laquelle se trouve l'anse de levage).

En outre, la partie horizontale peut ainsi avoir une hauteur plus faible que celle des structures antérieures, de sorte que la hauteur totale du véhicule sur lequel est chargé le conteneur grâce à la structure selon l'invention, peut aisément respecter la hauteur maximum de quatre mètres autorisée par le code de la route dans de nombreux pays.

Selon des caractéristiques préférées de l'invention, les moyens pour accrocher un conteneur comportent en outre deux troisièmes dispositifs de verrouillage adaptés chacun à coopérer avec une pièce de coin inférieure avant respective du conteneur.

Grâce à ces troisièmes dispositifs de verrouillage, on fixe les points de coopération entre le conteneur et la région située dans l'angle de la structure, ce qui permet encore d'améliorer ses performances de poids et de dimensionnement.

Selon d'autres caractéristiques préférées de l'invention, la structure comporte quatre surfaces d'appui horizontales inférieures adaptées à reposer respectivement sur les pièces de coins supérieures d'un conteneur sur lequel est posée la structure.

La structure selon l'invention permet ainsi, non seulement le stockage au sol des conteneurs équipés d'une telle structure, mais aussi le gerbage des conteneurs ainsi équipés sur plusieurs niveaux.

Selon des caractéristiques avantageuses de ce mode de réalisation, les surfaces d'appui surfaces d'appui inférieures présentent un orifice débouchant dans un espace libre, permettant la coopération avec un verrou tournant.

On peut ainsi verrouiller un conteneur équipé d'une structure par rapport au conteneur sur lequel repose l'ensemble conteneur-structure, de sorte que cet ensemble, après avoir été formé pour le transport routier, peut être conservé lors du stockage et des autres modes de transport, notamment maritimes.

L'exposé de l'invention sera maintenant poursuivi par la description d'un exemple de réalisation, donnée ci-après à titre illustratif et non limitatif, en référence aux dessins annexés sur lesquels :
- la figure 1 est une vue en perspective d'un conteneur ISO bien connu ;
- la figure 2 est une vue en perspective d'une structure conforme à l'invention, prévue pour coopérer avec le conteneur de la figure 1 ;
- la figure 3 est une vue en perspective d'une variante de la structure de la figure 2, le conteneur de la figure 1 y étant accroché ;
- les figures 4 à 6 illustrent le déchargement d'un conteneur ISO équipé d'une structure conforme à l'invention, à partir d'un véhicule équipé d'un dispositif de manutention à bras de levage hydraulique ;
- la figure 7 est une vue de côté montrant trois conteneurs ISO empilés, équipés chacun d'une deuxième variante de la structure conforme à l'invention ;
- la figure 8 est une vue en perspective du détail repéré VIII sur la figure 7 ; et
- la figure 9 montre en coupe les éléments illustrés sur la figure 8.

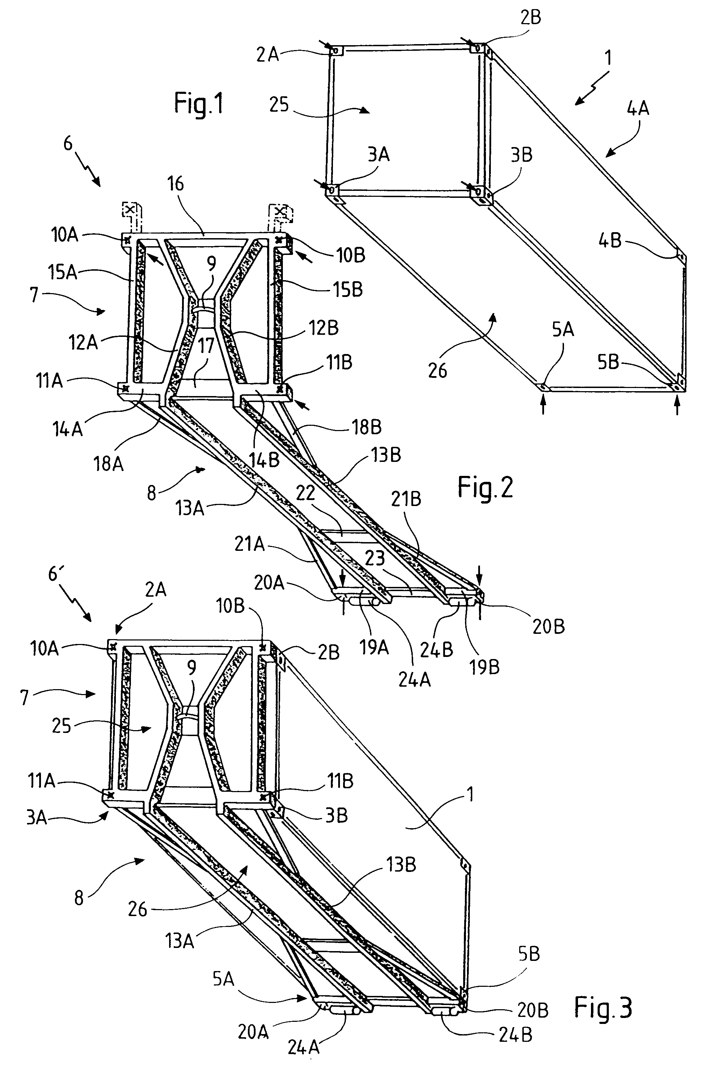

Le conteneur 1 montré sur la figure 1 est conforme à la norme ISO 668, et plus précisément à la série 1C prévue par celle-ci : il a une forme parallélépipédique avec une largeur de 2438 mm (8 pieds), une hauteur également de 2438 mm, et une longueur de 6058 mm (20 pieds). Dans chacun des huit coins du conteneur, il est prévu conformément à la norme une pièce de coin, respectivement supérieure avant droite 2A et supérieure avant gauche 2B, inférieure avant droite 3A et inférieure avant gauche 3B, supérieure arrière droite 4A et supérieure arrière gauche 4B, inférieure arrière droite 5A et inférieure arrière gauche 5B.

La structure mécanosoudée 6 conforme à l'invention montrée sur la figure 2 comporte une portion verticale 7 et une portion horizontale 8.

La portion verticale 7 est munie à une certaine hauteur d'une anse de levage 9, elle comporte à son sommet deux dispositifs de verrouillage 10A et 10B, respectivement droit et gauche, et à sa base deux dispositifs de verrouillage 11A et 11B, respectivement droit et gauche.

Plus précisément, la portion horizontale 7 comporte deux montants internes 12A et 12B légèrement en forme de V, entre lesquels est disposée, à leur partie la plus rapprochée, l'anse de préhension 9. La base du montant 12A est raccordée à l'extrémité avant du longeron 13A de la portion horizontale 8 ainsi qu'à une traverse inférieure externe 14A se raccordant à son tour à la base d'un montant extérieur 15A dont le sommet est raccordé à une traverse 16 à laquelle est également raccordé le sommet du montant 12A. La portion verticale 7 comporte des éléments similaires sur le côté gauche, qui portent les mêmes références, mais avec le suffixe B, la traverse 16 servant également d'entretoise entre les montants intérieurs 12A et 12B. Une entretoise inférieure 17 est prévue entre les traverses 14A et 14B. Les dispositifs de verrouillage 10A et 10B sont respectivement disposés au sommet du montant 15A et du montant 15B, avec un montage télescopique, de sorte que les dispositifs 10A et 10B sont mobiles verticalement entre la position représentée en traits pleins et celle dessinée en traits interrompus.

Les dispositifs de verrouillage 11A et 11B sont disposés respectivement à la base du montant 15A et du montant 15B. Un tirant oblique 18A est prévu entre le longeron 13A de la partie horizontale 8 et la traverse inférieure 14A, et symétriquement un tirant oblique 18B est prévu entre le longeron 13B et la traverse 14B.

Dans la portion horizontale 8, il est disposé à l'arrière du longeron 13A, du côté extérieur, une traverse 19A au bout de laquelle est disposé un dispositif de verrouillage 20A, la traverse 19A étant reliée au longeron 13A par un tirant oblique 21A. La partie gauche de la portion horizontale 8 est similaire et symétrique à la partie droite qui vient d'être décrite, les éléments similaires portant la même référence, mais avec le suffixe B. Deux entretoises 22 et 23 sont prévues entre les longerons 13A et 13B. Sous chaque traverse 19A et 19B est prévu un rouleau de contact avec le sol, respectivement 24A et 24B.

La structure 6' montrée sur la figure 3 est similaire à la structure 6, mais les dispositifs de verrouillage 10A et 10B sont fixes au lieu de pouvoir coulisser verticalement.

Pour accrocher le conteneur 1 à la structure 6 ou à la structure 6', on dispose la face avant 25 du conteneur en regard de la portion horizontale 7 et la face inférieure 26 en regard de la portion horizontale 8, de la manière illustrée sur la figure 3. Les dispositifs de verrouillage 10A, 10B, 11A et 11B se trouvent alors respectivement en correspondance avec la portion des pièces de coins 2A, 2B, 3A et 3B situées sur la face avant 25 du conteneur 1, tandis que les dispositifs de verrouillage 20A et 20B se trouvent respectivement en correspondance avec la partie des pièces de coins 5A et 5B situées sur la face inférieure 26. Il suffit donc de mettre en place chaque dispositif de verrouillage dans la pièce de coin qui lui correspond pour que le conteneur 1 soit verrouillé à la structure 6 ou à la structure 6'.

Cette dernière structure est prévue pour coopérer avec des conteneurs tels que le conteneur 1, c'est-à-dire conformes à la série 1C de la norme précitée, tandis que la structure 6 est adaptée à coopérer aussi bien avec les conteneurs de la série 1C que de la série 1CC, cette dernière série différant de la première par le fait que la hauteur du conteneur est de 2591 mm (8 pieds 6 pouces) au lieu de 2438 mm (8 pieds).

On notera que la structure 6 ou la structure 6' n'a aucun dépassement en largeur par rapport au conteneur 1, et que les dépassements en longueur et en hauteur sont modérés, compte tenu de la faible épaisseur de la portion verticale 7 et de la portion horizontale 8.

Les entretoises 17, 22 et 23 sont disposées du côté interne de la structure, de sorte que le bras de levage du mécanisme de manutention peut se loger entre les longerons 13A et 13B et les montants 12A et 12B, conformément à la norme DIN 30772. Afin de minimiser l'épaisseur de la portion horizontale 8, la hauteur de l'espace libre entre les longerons 13A et 13B est égale au minimum permis par la norme DIN 30772, c'est-à-dire 150 mm. Plus généralement, les structures conformes à l'invention illustrées sur les dessins sont conformes à cette même norme, elles comportent notamment les butées de positionnement par rapport au châssis du véhicule exigées par cette norme (non représentées).

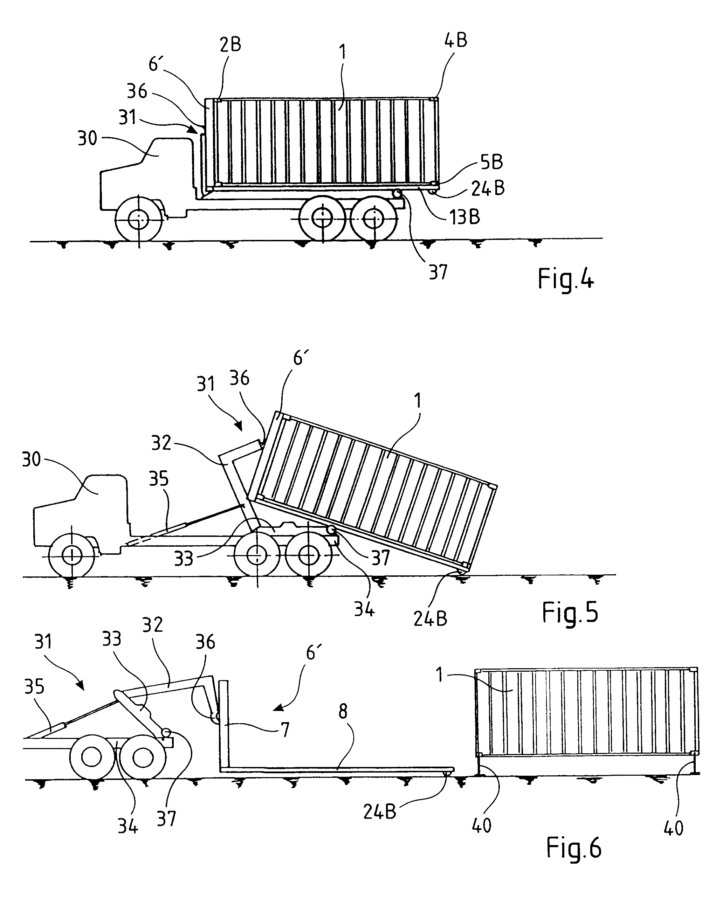

Le camion 30 montré sur les figures 4 à 6 est équipé d'un dispositif de manutention 31 à bras de levage hydraulique, comme décrit dans le brevet français 2.185.520. Ce dispositif de manutention comporte une potence 32 articulée à l'arrière sur l'avant d'un faux châssis 33 lui-même articulé à l'arrière sur le châssis 34 du camion 30, un vérin 35 étant prévu entre l'avant de ce châssis et la potence 32. Le sommet de cette dernière porte un crochet 36, et des galets 37 sont prévus à l'arrière du faux-châssis 33.

Dans la position illustrée sur la figure 4, le camion 30 est chargé avec l'ensemble montré sur la figure 3, formé de la structure 6' sur laquelle est accroché le conteneur 1. Dans cette position, l'ensemble repose à l'arrière sur les galets 37 par l'intermédiaire des longerons 13A et 13B, et est soutenu à l'avant par le crochet 36 dans lequel est engagée l'anse de préhension 9.

Pour décharger l'ensemble, on fait sortir la tige du vérin 35, la potence 32 bascule en arrière autour de son articulation avec le faux châssis 33, l'ensemble structure 6'-conteneur 1 recule (les longerons 13A et 13B forment des rails adaptés à rouler sur les galets 37) puis s'incline vers le sol avec lequel il vient en contact par les rouleaux 24A et 24B (voir figure 5), la potence 32 vient en appui sur une butée du faux châssis 33 de sorte que ces derniers forment un ensemble rigide qui bascule autour de l'articulation entre le faux châssis 33 et le châssis 34 lorsque la tige du vérin 35 continue à sortir, jusqu'à ce que l'ensemble structure 6'-conteneur 1 soit entièrement déchargé.

Dans la configuration montrée sur la figure 6, après que l'ensemble structure 6'-conteneur 1 ait été posé sur le sol, on a monté des crics 40 sur les faces extérieures des pièces de coin inférieures 3A, 3B, 5A, 5B, puis on a déployé les crics, on a décroché les dispositifs de verrouillage 10A, 10B, 11A, 11B, 20A et 20B, et le camion 30 a avancé pour dégager la structure 6' du conteneur 1. La structure peut alors être utilisée pour un autre conteneur, éventuellement après avoir été rechargée et transportée par le camion 30.

Plus généralement on peut utiliser tout moyen connu pour manutentionner un conteneur afin de le déposer sur la structure 6 ou 6', ou bien pour l'en enlever, et notamment les dispositifs qui s'accrochent dans les pièces de coin supérieures 2A, 2B, 4A, et 4B afin de permettre le levage du conteneur par une grue.

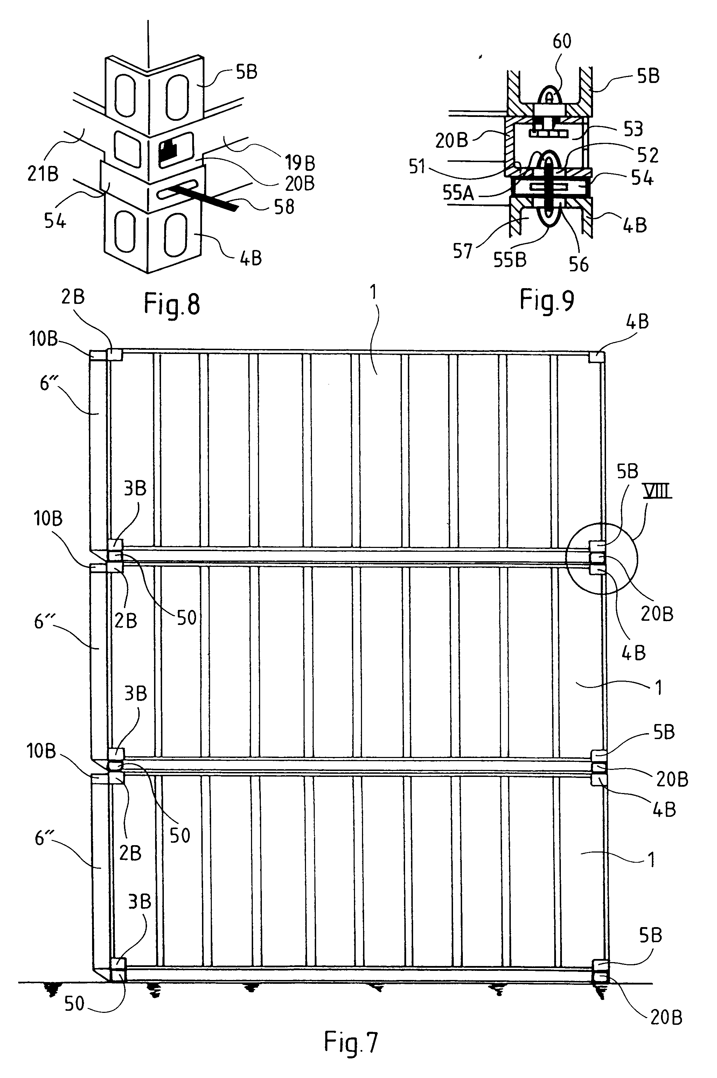

La figure 7 montre trois conteneurs 1 empilés, accrochés chacun à une variante 6'' de la structure selon l'invention, similaire à la structure 6', mais avec les dispositifs de verrouillage 11A et 11B remplacés par des dispositifs 50 situés dans la portion horizontale 8 au lieu de la portion verticale 7, les deux dispositifs de verrouillage 50 coopérant avec les pièces de coin 3A et 3B par leur face inférieure au lieu de leur face avant, les rouleaux 24A et 24B ayant été enlevés s'ils sont amobiles, ou rangés dans leur logement s'ils sont rétractables, par exemple comme décrit dans le brevet français 2.185.520 précité.

Dans les structures 6'', les deux dispositifs de verrouillage 50 ainsi que les dispositifs de verrouillage 20A et 20B comportent chacun une surface d'appui horizontale inférieure adaptés à reposer respectivement sur les pièces de coin supérieures d'un conteneur ISO sur lequel est posée la structure, c'est-à-dire que les dispositifs 50 sont adaptés à reposer respectivement sur les pièces de coin 2A et 2B du conteneur 1 et les dispositifs 20A et 20B sur les pièces de coin 4A et 4B.

Dans la disposition représentée sur la figure 7, le conteneur 1 le plus bas n'est pas seulement posé sur le sol, il y est accroché grâce à un verrou tournant, et les deux autres conteneurs sont verrouillés au conteneur sur lequel ils sont posés, grâce à un double verrou tournant, comme montré sur la figure 8.

Le dispositif de verrouillage 20B, de même que le dispositif 20A et le dispositif 50, est en effet une pièce creuse dont la surface d'appui inférieure 51 présente un orifice 52 (voir figure 9) débouchant dans un espace libre 53, permettant la coopération d'une façon bien connue avec le double verrou tournant 54 disposé entre le dispositif de verrouillage et la pièce de coin supérieure du conteneur sur lequel on prend appui : les têtes oblongues opposées 55A et 55B du double verrou tournant 54 passent respectivement dans les espaces 53 et 57 des dispositifs 20B et 4B en passant par les lumières oblongues respectives 52 et 56, et lorsqu'on manoeuvre la manette 58, les têtes 55A et55B font un quart de tour, et verrouillent donc ensemble les éléments 4B et 20B.

On notera qu'on voit également sur la figure 9, la tête oblongue 60 du dispositif de verrouillage 20B, bloquée sur la pièce de coin 5B.

La description qui précède pour le dispositif de verrouillage 20B s'applique d'une façon similaire au dispositif de verrouillage 20A pour sa coopération avec les pièces de coins 5A et 4A, et aux dispositifs 50 pour leur coopération avec les pièces de coins 3B et 2B ou 3A et 2A.

On rappelle que l'invention n'est pas limitée aux exemples décrits et représentés.

## Revendications

1. Structure pour permettre de charger ou décharger des marchandises à transporter avec un dispositif (31) de manutention à bras de levage hydraulique, comportant : des moyens pour y accrocher les marchandises, une portion verticale munie d'une anse de levage (9) adaptée à coopérer avec le crochet (36) du dispositif de manutention, et une portion horizontale munie de rails longitudinaux adaptés à rouler sur les galets (37) situés à l'arrière du dispositif de manutention ; caractérisée en ce que les moyens pour accrocher la marchandise à transporter comportent des moyens pour accrocher un conteneur (1) muni de pièces de coin, comportant : sur ladite portion verticale (7), deux premiers dispositifs de verrouillage (10A, 10B) adaptés chacun à coopérer avec une pièce de coin supérieure avant respective (2A, 2B) d'un dit conteneur (1) dont la face avant (25) est disposée en regard de la portion verticale (7) ; et sur ladite portion horizontale (8), deux deuxièmes dispositifs de verrouillage (20A, 20B) adaptés chacun à coopérer avec une pièce de coin inférieure arrière respective (5A, 5B) d'un dit conteneur (1) dont la face inférieure (26) est disposée en regard de la portion horizontale (8), grâce à quoi ledit conteneur (1) accroché à la structure (6 ; 6' ; 6'') procure une rigidification entre lesdites portions verticale (7) et horizontale (8).

2. Structure selon la revendication 1, caractérisée en ce que les moyens pour accrocher un conteneur comportent en outre deux troisièmes dispositifs de verrouillage (11A, 11B ; 50) adaptés chacun à coopérer avec une pièce de coin inférieure avant respective (3A, 3B) du conteneur.

3. Structure selon la revendication 2, caractérisée en ce que lesdits troisièmes dispositifs de verrouillage (11A, 11B) sont prévus sur la portion verticale (7).

4. Structure selon la revendication 2, caractérisée en ce que lesdits troisièmes dispositifs de verrouillage (50) sont prévus sur la portion horizontale (8).

5. Structure selon l'une quelconque des revendications 1 à 4, caractérisée en ce qu'elle comporte quatre surfaces d'appui horizontales inférieures (51) adaptées à reposer respectivement sur les pièces de coins supérieures (2A, 2B, 4A, 4B) d'un conteneur (1) sur lequel est posée la structure (6'').

6. Structure selon la revendication 5, caractérisée en ce que lesdites surfaces d'appui inférieures (51) présentent un orifice (52) débouchant dans un espace libre (53), permettant la coopération avec un verrou tournant (54).

7. Structure selon l'une quelconque des revendications 1 à 6, caractérisée en ce qu'elle comporte à l'arrière de la partie horizontale (8) des rouleaux (24A, 24B) de contact avec le sol.

8. Structure selon la revendication 7, caractérisée en ce que lesdits rouleaux (24A, 24B) de contact avec le sol sont escamotables ou amovibles.

9. Structure selon l'une quelconque des revendications 1 à 8, caractérisée en ce que lesdits premiers dispositifs de verrouillage (10A, 10B) sont mobiles verticalement pour s'adapter à des conteneurs de hauteurs différentes.

10. Structure selon l'une quelconque des revendications 1 à 9, caractérisée en ce que la portion verticale (7) comporte deux montants internes (12A, 12B) entre lesquels est disposée ladite anse de préhension (9), chaque montant interne ayant sa base raccordée à l'extrémité avant d'un longeron (13A, 13B) de la portion horizontale (8), ainsi qu'à une traverse inférieure externe (14A, 14B) se raccordant à son tour à la base d'un montant extérieur (15A, 15B) dont le sommet est raccordé à une traverse (16) à laquelle est également raccordé le sommet de chaque montant interne (12A, 12B) et du montant extérieur opposé (15A, 15B), chaque dit premier dispositif de verrouillage (10A, 10B) étant disposé au sommet d'un montant extérieur (15A, 15B).

11. Structure selon la revendication 10, caractérisée en ce que chaque dit troisième dispositif de verrouillage (11A, 11B ; 50) est disposé à la base d'un dit montant extérieur (15A, 15B).

12. Structure selon l'une quelconque des revendications 10 ou 11, caractérisée en ce qu'un tirant oblique (18A, 18B) est prévu entre chaque longeron (13A, 13B) de la partie horizontale (8) et une dite traverse inférieure externe (14A, 14B).

13. Structure selon l'une quelconque des revendications 10 à 12, caractérisée en ce qu'une entretoise (17) entre les deux montants internes (12A, 12B) est prévue à leur base.

14. Structure selon l'une quelconque des revendications 1 à 13, caractérisée en ce que la portion horizontale comporte deux longerons (13A, 13B) formant lesdits rails à l'arrière de chacun desquels est disposée du côté extérieur une traverse (19A, 19B) au bout de laquelle est disposé un dit deuxième dispositif de verrouillage (20A, 20B), chaque traverse (19A, 19B) étant reliée au longeron (13A, 13B) correspondant par un tirant oblique (21A, 21B), au moins une entretoise (22, 23) étant prévue entre les deux longerons.
